Europäisches Patentamt

(19) European Patent Office

Office européen des brevets

(11) EP 0 887 688 A2

(12) EUROPEAN PATENT APPLICATION

(43) Date of publication:
30.12.1998 Bulletin 1998/53

(51) Int. Cl.⁶: G02F 1/125

(21) Application number: 98111066.1

(22) Date of filing: 17.06.1998

(84) Designated Contracting States:
AT BE CH CY DE DK ES FI FR GB GR IE IT LI LU
MC NL PT SE
Designated Extension States:
AL LT LV MK RO SI

(30) Priority: 25.06.1997 JP 167809/97

(71) Applicant: NEC CORPORATION
Tokyo (JP)

(72) Inventor: Nakaya, Ken-ichi
Minato-ku, Tokyo (JP)

(74) Representative:
VOSSIUS & PARTNER
Siebertstrasse 4
81675 München (DE)

(54) Wavelength tunable optical filters

(57) The light receiving apparatus of the present invention has a structure in which a first and a second optical filter having different band pass characteristics are cascaded to each other. Each of the first and second optical filters includes an optical waveguide provided on the surface of a dielectric substrate made of, for example, lithium niobate; an interdigital electrode provided on the substrate for exciting a surface acoustic wave; absorbers provided in front of and in back of the interdigital electrode; a polarizer provided at the input portion of the optical waveguide; and polarizers provided in back of the acoustic absorbers. The distance between the interdigital electrode and the acoustic absorber provided in back of the interdigital electrode differs between the first and second optical filters. The ratio of the interaction length of the first optical filter to that of the second optical filter is preferably between 1 : 0.56 and 1 : 0.81. Each of the first and second optical filters further comprises a pair of surface acoustic wave barriers opposed each other and located above and below the optical waveguide. The distance between the optical waveguide and the surface acoustic wave barrier is shorter at the input portion and the output portion of the optical waveguide than at the generally central portion.

Fig. 6

EP 0 887 688 A2

## Description

The present invention relates to a light receiving apparatus using wavelength tunable optical filters and, in particular, the present invention relates to a light receiving apparatus using optical waveguide type wavelength tunable optical filters desirable for use in, for example, a wavelength tunable multiplexer/demultiplexer for converging and diverging desired signal light wavelengths used in the wavelength division multiplexing fiber-optic transmission system.

As the optical communications system has put to practical use in recent years, the demand for a higher capacity, multifunctional communications system rises. Following this, the realization of new functions such as the generation of faster speed optical signals, the multiplexing of wavelengths in a single optical transmission path, the switching and changing of optical transmission path is required. The development of the wavelength division multiplexing (to be referred to as "WDM" hereinafter) fiber-optic transmission system is, in particular, actively under way as optical fiber amplifiers have been rapidly put to practical use.

To realize the WDM transmission system, a wavelength tunable multiplexer/demultiplexer for multiplexing and demultiplexing freely chosen signal light wavelengths is essential. A wavelength tunable optical filter used in the wavelength tunable multiplexer/demultiplexer is required of a wide wavelength tunable range, fast speed operation and the like. Concerning the wavelength tunable optical filters, there is seen the active development of a TE-TM mode conversion type wavelength tunable optical filter using the acousto-optic (to be referred to as "AO" hereinafter) effect capable of easily tuning a selected wavelength by changing the frequency of the surface acoustic wave (to be referred to as "SAW" hereinafter).

The present invention relates to a light receiving apparatus using the above-stated TE-TM mode conversion and waveguide type wavelength tunable optical filter realized by the optical waveguide. Conventional techniques thereof will now be described.

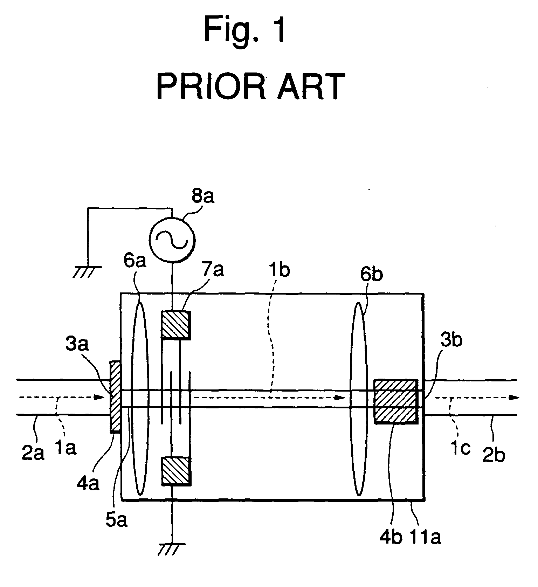

FIG. 1 shows an example of the conventional TE-TM mode conversion and waveguide type wavelength tunable optical filter. The wavelength tunable filter shown in FIG. 1 has a structure in which an optical waveguide 5a is formed on the surface of a substrate 11a made of Y-cut lithium niobate (LiNbO3). Here, a portion having a refractive index slightly higher than that of the substrate 11a becomes the optical waveguide 5a. The optical waveguide 5a is formed by thermally diffusing, for example, titanium (Ti) on the substrate 11a.

Additionally, right above the optical waveguide 5a are provided an SAW excitation interdigital electrode 7a and SAW absorbers 6a and 6b. An input polarizer 4a is provided at an input port 3a to enter only certain polarization, and an output polarizer 4b is provided in front of an output port 3b to extract only certain polarization.

Next, the principle of the operation of the wavelength tunable filter shown in FIG. 1 will be described. The SAW which has been excited by applying an RF signal 8a onto the interdigital electrode 7a, acts as periodical refractive index grating in relation to the waveguide light 1b. Since the optical wave propagation direction is determined by using the Y cut lithium niobate, the effective refractive indexes of TE and TM modes differ from each other on the optical waveguide 5a. It is noted that the component which electric field is parallel to the surface of substrate is defined as a TE mode and the component which electric field is perpendicular to the surface of the substrate is defined as a TM mode.

The refractive index grating period formed by the SAW is defined as L, and the effective refractive indexes of the TE and TM modes are defined as NTE and NTM, respectively. In this case, if the following phase matching conditional expression (1) is satisfied, the TE-TM mode conversion of the wavelength I is conducted in interaction with the refractive index grating:

$$\lambda = |NTE - NTM| \Lambda \qquad (1)$$

The refractive index period L is inversely proportional to the frequency f of the RF signal 8a. By changing the frequency of the RF signal 8a, therefore, it is possible to easily change the wavelength I subjected to TE-TM mode conversion. Thus, in the above-stated waveguide type wavelength tunable filter, the input-side polarizer 4a serves as a TM polarizer and the output-side polarizer 4b serves as a TE polarizer, whereby only TM modes in the inputted light are incident on the optical waveguide 5a by means of the input-side TM polarizer.

Only the wavelength component satisfying the phase matching condition in interaction with the refractive index grating is converted from the TM mode to the TE mode in the guided light 1b incident on the optical waveguide 5a. Since the TM modes in the guided light 1b are removed by the output-side TE polarizer 4b, the output light 1c outputted from the output port 3b includes only the wavelengths which satisfy the phase matching condition. If the frequency of the RF signal 8a is appropriately set, therefore, it is possible to select desired wavelengths.

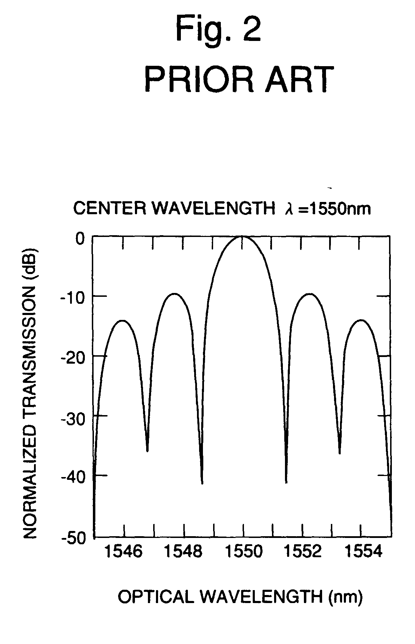

FIG. 2 shows an example of the transmission characteristics (to be referred to as "filter characteristics" hereinafter) normalized by the transmission factor of the transmission central wavelength in the conventional waveguide type wavelength tunable optical filter shown in FIG. 1.

In the waveguide type wavelength optical filter, the coupling coefficient between the refractive index grating and the optical wave within the interactive region is constant in respect of the propagation direction. Owing to this, as shown in FIG. 2, the transmission factors of secondary transmission ranges (to be referred to as "side lobes" hereinafter) existing on both sides of the primary transmission range (to be referred to as "main lobe" hereinafter) including the transmission central wavelength are attenuated by as small as about 9 dB from that of the main lobe.

To ensure desired transmission characteristics, it is necessary for the light reception side to sufficiently control the wavelength components other than those of the selected signal light wavelength in the WDM system. In the waveguide type wavelength tunable optical filter stated above, by contrast, the transmission factor of the peak wavelength in the side lobe is high. For that reason, if the above-stated waveguide type wavelength tunable optical filter is adapted in the WDM system, it is required to distance the signal light wavelengths from the peak wavelength of the side lobe and to locate them in the vicinity of the transmission null. This, in turn, causes the problem that quite strict setting accuracy is required for the signal light wavelengths. To solve this problem, the transmission factor of the peak wavelength in the side lobe might be reduced. For this purpose, there is known a method for reducing the transmission factor in the first side lobe by weighting the coupling coefficient between the SAW and the guided light in the propagation direction of the guided light.

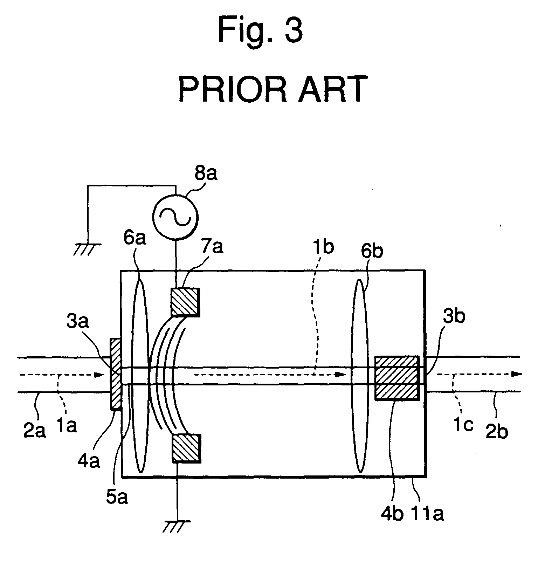

Japanese Patent Laid-Open Publication No. 5-323248, for instance, teaches weighting the coupling coefficient by curving the shape of the SAW excitation electrode to reduce the transmission factor in the first side lobe. FIG. 3 illustrates the structure of the waveguide type wavelength tunable optical filter described in the 5-323248.

In the waveguide type wavelength tunable optical filter shown in FIG. 3 has a structure in which the SAW excitation interdigital electrode 7a has a curved shape while the conventional waveguide type wavelength tunable optical filter has non-curved shape. In this waveguide type wavelength tunable optical filter, the coupling coefficient between the SAW and the guided light 1b is weighted such that the coupling coefficient gradually increases within the optical waveguide 5a in the optical wave propagation direction and that, after the coupling coefficient reaches a maximum, it gradually begins to decrease. By so doing, it is possible to reduce the transmission factor in the first side lobe to as small as -17dB according to the 5-323248.

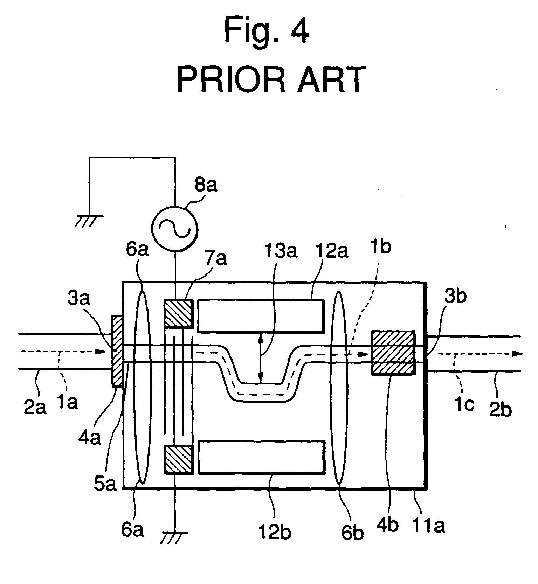

In Japanese Patent Laid-Open Publication No. 8-211349, it is described that, for purposes of improving the transmission attenuation in the first side lobe, the coupling coefficient is weighted by giving an offset distance to the optical wave propagation direction of the optical waveguide 5a. FIG. 4 illustrates the structure of the waveguide type wavelength tunable optical filter described in the 8-211349. As shown therein, the filter has a structure in which SAW barriers 12a and 12b are added to the conventional structure. Moreover, it has a structure in which the offset distance 13a between the optical waveguide 5a and the SAW barrier 12a is changed in the optical wave propagation direction. It is noted that the SAW barriers 12a and 12b are formed by thermally diffusing, for example, Ti, Mg, Ni, Cu, Zn or Ta.

In the waveguide type wavelength tunable optical filter, the distance between the optical waveguide 5a and the SAW barrier 12a varies in the propagation direction of the guided light. Due to this, the coupling coefficient between the SAW and the guided light 1b is weighted such that the coupling coefficient gradually increases within the optical waveguide 5a and that, after reaching a maximum, it gradually begins to degrease. As a result, an improvement in the transmission attenuation in the first side lobe becomes possible. According to the 8-211349, the transmission attenuation in the first side lobe can be improved to 15 dB.

Furthermore, according to the 8-211349, since the waveguide type wavelength tunable optical filter portion has a multiple filter structure, it is further possible to improve the transmission attenuation in the first side lobe.

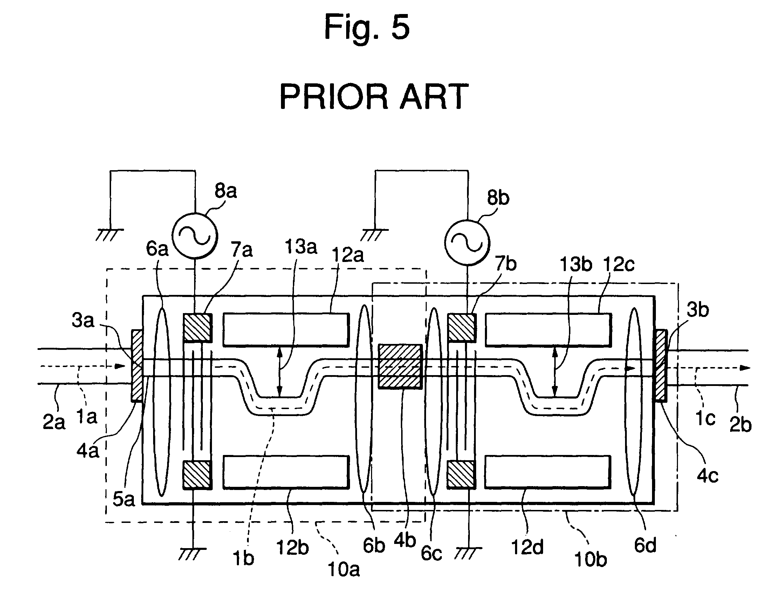

FIG. 5 illustrates the structure of multiple waveguide type wavelength tunable optical filters taught in the 8-211349. As shown therein, the waveguide type wavelength tunable optical filter portion has a structure in which waveguide type wavelength tunable optical filters 10a and 10b shown in FIG. 3 are connected in series.

In the waveguide type wavelength tunable optical filter, the overall coupling coefficient is equal to the product of the coupling coefficients of the respective TE-TM mode conversion type wavelength tunable optical filters and the transmission factors in side lobes can be therefore controlled in a sufficient manner.

It is noted that the equivalent constituent elements in FIGS. 1, and 3 through 5 are denoted by the same reference numerals.

In the prior art shown in FIGS. 3 and 4, the actual control accuracy in the manufacturing process is insufficient for weighting the coupling distribution between the desired SAW and the guided light in the components. Due to this, the problem that it is difficult to actually obtain necessary transmission attenuation in the side lobes rises.

Additionally, in prior art FIG. 4, the structure of curving an optical waveguide is employed. The optical waveguide curving causes excess radiation loss which is followed by the problem of an increase in insertion loss.

In prior art FIG. 5, the waveguide type wavelength tunable optical filters having the same structure cannot be simply connected in series. Due to this, the problem that the transmission attenuation in the side lobe of the multiple filters cannot be increased to twice or more of the transmission attenuation in the side lobe of a single waveguide type wavelength tunable optical filter.

It is therefore the first object of the present invention to provide a light receiving apparatus using a waveguide type wavelength tunable optical filter having a larger tolerance during manufacturing operation without making manufacturing process complex. It is also the second object of the present invention to provide a light receiving apparatus using a waveguide type wavelength tunable optical filter capable of easily obtaining large side lobe transmission attenuation.

The light receiving apparatus according to the present invention comprises a first optical filter having band pass characteristics; and a second optical filter cascaded to the first optical filter and having band pass characteristics different from those of the first optical filter.

Each of the first and second optical filters includes a TE-TM mode conversion type wavelength tunable optical filter device.

The first and second optical filters make use of the acousto-optic (AO) effect.

The band pass characteristics of the first and second optical filters are at least one of a band pass width and a transmission central wavelength.

Each of the first and second optical filters comprises an optical waveguide formed on the surface of a dielectric substrate; an interdigital electrode provided on the substrate for exciting a surface acoustic wave (SAW); acoustic absorbers provided in front of and in back of the interdigital electrode; a polarizer provided at an input portion of the optical waveguide; and polarizers provided in back of the acoustic absorbers.

The distance (or interaction length) between the interdigital electrode and the acoustic absorber provided in back of the interdigital electrode differs between the first and second optical filters.

The electric power or frequency of a sine wave electric signal applied onto the interdigital electrode differs between the first and second optical filter.

The ratio of the interaction length of the first optical filter to that of the second optical filter is between 1 : 0.56 and 1 : 0.81.

Each of the first and second optical filters further comprises a pair of surface acoustic wave barriers opposed each other and located above and below the optical waveguide.

The distance between the optical waveguide and the surface acoustic wave barrier is shorter at the input portion and the output portion of the optical waveguide than at generally central portion.

The dielectric substrate is a lithium niobate (LiNbO$_3$) substrate.

The above and other objects, features and advantages of the present invention will become more apparent from the following detailed description when taken in conjunction with the accompanying drawings wherein:

FIG. 1 shows the first example of the conventional waveguide type wavelength tunable optical filter;
FIG. 2 shows transmission characteristics of the conventional waveguide type wavelength tunable optical filter;

FIG. 3 shows the second example of the conventional waveguide type wavelength tunable optical filter;
FIG. 4 shows the third example of the conventional waveguide type wavelength tunable optical filter;
FIG. 5 shows the fourth example of the conventional waveguide type wavelength tunable optical filter;
FIG. 6 shows the structure of the light receiving apparatus in the first embodiment according to the present invention;
FIG. 7 shows the transmission characteristics of the optical filter used in the first embodiment according to the present invention, wherein graph (A) shows the filter characteristics of the TE-TM mode conversion type wavelength tunable optical filter portion 10a, graph (B) shows the filter characteristics of the TE-TM mode conversion type wavelength optical filter portion 10b, and graph (C) shows the filter characteristics of the present invention shown in FIG. 6;
FIG. 8 shows the transmission characteristics of the optical filter used in the first embodiment according to the present invention in respect of a plurality of interaction length ratios; and
FIG. 9 shows the structure of the light receiving apparatus in the second embodiment according to the present invention.

The modes of the embodiments according to the present invention will now be described in detail with reference to the accompanying drawings.

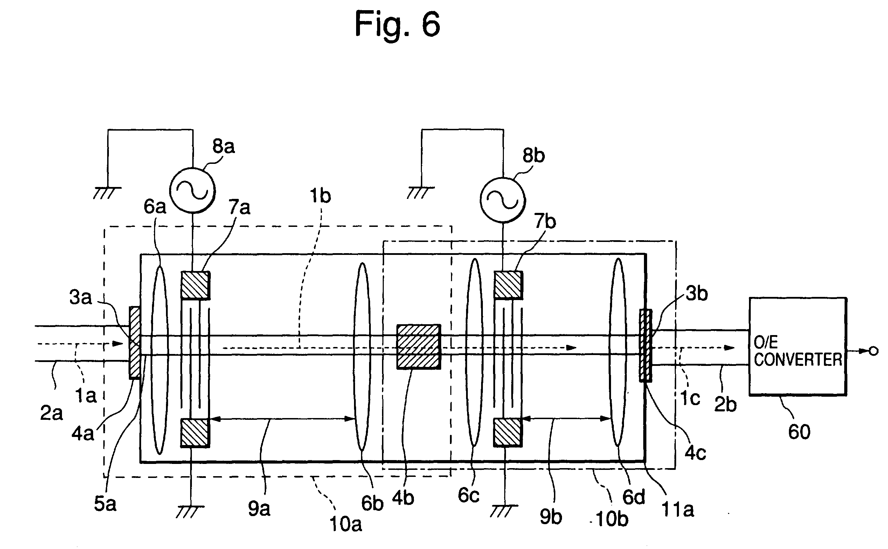

FIG. 6 shows the structure of the first embodiment according to the present invention. The same constituent elements as those in FIGS. 1 and 3 through 5 are denoted by the same reference numerals. The structure of FIG. 6 is that an O/E converter is connected to Ti diffusion type X-cut, Y- propagation axis LiNbO$_3$ waveguide type wavelength tunable filter.

Now, an example of a method for manufacturing a waveguide type wavelength tunable filter used in this embodiment will be briefly described. In FIG. 6, a Ti film is deposited on a LiNbO3 substrate 11a and patterning is conducted for the formation of an optical waveguide pattern. Thermal diffusion is then conducted for several hours to thereby form an optical waveguide 5a. Thereafter, SAW excitation interdigital electrodes 7a and 7b are formed above the optical waveguide 5a.

Furthermore, acoustic absorbers 6a and 6b are provided in front of and back of the SAW excitation interdigital electrode 7a, respectively. Acoustic absorbers 6c and 6d are provided in front of and back of the SAW excitation interdigital electrode 7b, respectively. An input polarizer 4a, a polarizer 4b and a polarizer 4c are provided at an input port 3a, in the back of the acoustic absorber 6b and at an output port, respectively.

The waveguide 5a, the SAW excitation interdigital electrode 7a, the acoustic absorber 6a, 6b and the polarizer 4a, 4b constitute, as a whole, a TE-TM mode conversion type wavelength tunable optical filter portion 10a. Also, the waveguide 5a, the SAW excitation interdigital electrode 7b, the acoustic absorbers 6c, 6d and the polarizers 4b, 4c constitute, as a whole, a TE-TM mode conversion type wavelength tunable optical filter portion 10b.

The interaction length 9a of the wavelength tunable optical filter portion 10a is set differently from the interaction length 9b of the wavelength tunable optical filter portion 10b. Interaction lengths indicate the distances between the interdigital electrodes 7a, 7b and the acoustic absorbers 6b, 6d at the output ports, respectively.

Next, the operation state of an example of the mode of the present invention shown in FIG. 6 will be described. It is noted that the polarizer 4a is a TM polarizer, the polarizer 4b is a TE polarizer and the polarizer 4c is a TM polarizer.

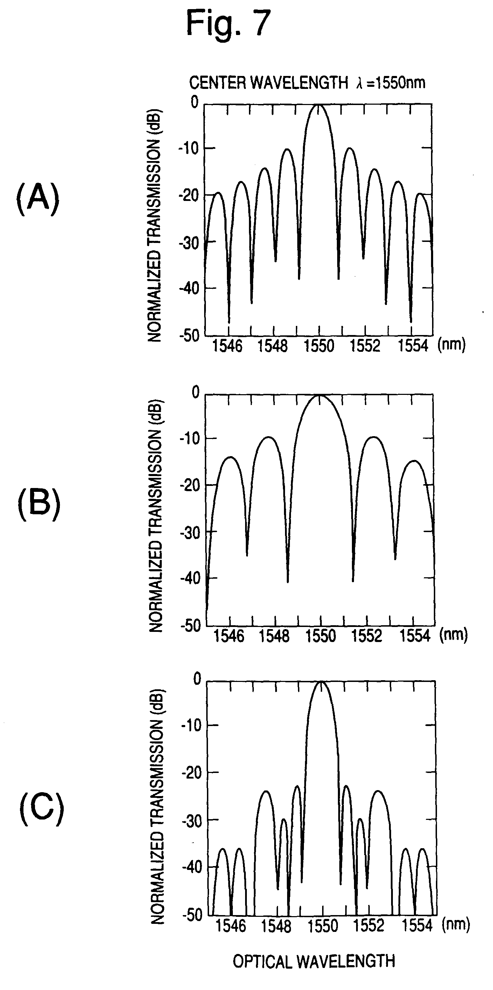

In FIG. 6, the inputted light 1a entering from the incident fiber 2a passes the polarizer 4a. The TE polarization components are removed and the resultant inputted light 1a is incident on the input port 3a and is moved to the optical waveguide 5a. In the guided light 1b moved to the optical waveguide 5a, only the optical wavelengths phase-matched to the SAW excited by the SAW excitation interdigital electrode 7a are converted from the TM modes to TE modes. Thereafter, the guided light 1b is moved to the TM polarizer 4b. At this time, only the TM modes which have not been converted to TE mode are removed. FIG. 7(A) shows the filter characteristics of the TE-TM mode conversion type wavelength tunable optical filter portion 10a.

Further, the guided light 1b interacts with the SAW excited by the SAW excitation interdigital electrode 7b. Here, only the phase-matched optical wavelengths are converted from the TE modes to the TM modes. Thereafter, the guided light 1b is inputted to the TM polarizer 4c. Here, only the TE modes which have not been converted to the TM mode are removed. FIG. 7(B) shows the filter characteristics of the TE-TM mode conversion type wavelength tunable optical filter portion 10b.

It is noted that the interaction length 9a of the TE-TM mode conversion type wavelength tunable optical filter portion 10a is set to differ from the interaction length 9b of the TE-TM mode conversion type wavelength tunable optical filter portion 10b. Due to this, transmission attenuation characteristics in respective side lobes are offset each other, thereby making it possible to improve side lobes. FIG. 7(C) shows an example of the filter characteristics of the present invention.

The concrete embodiment according to the present invention will now be described with reference to FIG. 6.

As an input fiber 2a, 1.55 μm-band polarization maintaining fiber is employed to keep the polarization state of the inputted light 1a constant. As an output fiber 2b, a 1. 55 μm single mode fiber is employed. Rutile plates are employed for input and output side polarizers, and are inserted between the input/output ports 2a, 2b and the input/output fibers 1a, 1b respectively. After making their transmission polarization states equal to each other, they are fixed with UV curing adhesives.

X-cut $LiNbO_3$ is employed for a dielectric substrate 11a and a propagation axis is set to the Y axis. The optical waveguide 5a is formed by thermally diffusing titanium with a Ti film thickness of 110 nm and a Ti stripe width of 6 μm at a diffusion temperature of 1050°C for eight (8) hours.

The SAW excitation interdigital electrode 7 is formed by forming a 50 nm Cr film and a 200 nm Al film by sputtering and then by patterning. The TE polarizer 4b is formed by forming a 200 nm Al film by sputtering and then by patterning. The acoustic absorber 6 is formed by patterning a resist. Here, the interaction lengths 9a, 9b of the waveguide type wavelength tunable optical filter portions 10a and 10b are 30 nm and 18 nm, respectively.

As a result, after setting RF signals 8a and 8b to 174.1 MHz and power of 0.2 W, the side lobe attenuation has been improved to 22 dB or higher. The insertion loss at the time of TM mode input is 2.7 dB.

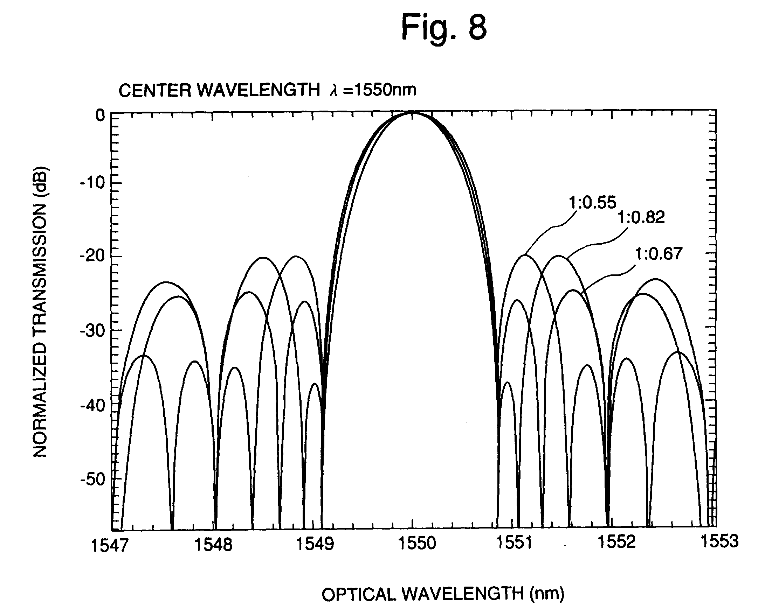

The ratio of the interaction lengths 9a and 9b is not necessarily set to 1 : 0.6 as described above. As long as the interaction lengths 9a and 9b are different from each other, it is possible to obtain the same advantage as stated above. It is noted that if the ratio is set between 1 : 0.56 and 1 : 0.81, in particular, side lobe transmission attenuation of 20 dB or higher can be obtained. FIG. 8 shows the transmission characteristics in regard of the ratios of 1 : 0.55, 1 : 0.67 and 1 : 0.82 obtained by numerical calculation.

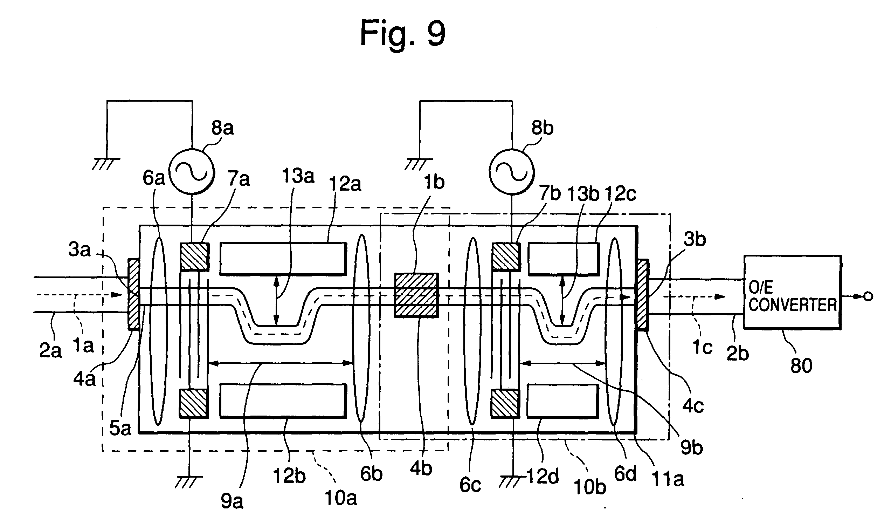

Moreover, the waveguide type wavelength tunable optical filter illustrated by FIG. 3 of Japanese Patent Laid-Open Publication No. 8-211349 is applicable to the present invention. The example of the structure in which the optical filter taught in FIG. 3 of the 8-211349 is applied to the present invention is shown in FIG. 9.

The waveguide type wavelength tunable optical filter in FIG. 9 differs from the optical filter of the present invention shown in FIG. 6 in the following respects. Namely, the optical filter shown in FIG. 9 is provided with the SAW barriers 12a, 12b, 13c and 14d. In addition, in FIG. 9, for purposes of weighting the coupling coefficient, offset distances 13a and 13b between the optical waveguide 2a and SAW barriers 12c, 12d are gradually decreased along the optical wave propagation direction. After reaching a minimum, the distances begin to be widened.

In the waveguide type wavelength tunable optical filter having such a structure, by making the interaction lengths 9a and 9b different from each other, it is possible to greatly improve side lobe transmission attenuation as in the case of FIG. 6 embodiment.

Furthermore, in the above-stated embodiments, the interaction lengths of the two optical filters are made to be different from each other, thereby making the transmission characteristics of the two optical filter portions different from each other. Alternatively, to obtain different transmission characteristics, it is possible to make different the frequencies or electric power of the RF signals applied onto the interdigital electrodes which constitute the two optical filter portions, respectively. By providing slightly different frequencies of RF signals, the transmission central frequencies of the two optical filter portions can be slightly shifted. At this time, the transmission characteristics of the two cascaded optical filter portions exhibit narrower transmission widths of the main lobes and reduced transmission factors of the side lobes. In addition, by providing RF signals with different electric power, the widths of the main lobes and the peak wavelengths in the side lobes can be made different between the two filter portions. If RF signals have the same frequency, the transmission factors in the side lobes in the transmission characteristics of the cascaded two optical filter portions are lowered.

The optical filter employed in the present invention can have the following advantages. According to the present invention, the two TE-TM mode conversion type wavelength tunable optical filter portions have different interaction lengths. Alternatively, the frequencies or electric power of the RF signals applied onto the two optical filter portions are set differently from each other. Due to this, the TE-TM mode conversion type wavelength tunable optical filter portions having different filter characteristics are cascaded. Accordingly, the TE-TM mode conversion type waveguide optical wavelength filter according to the present invention makes it possible to greatly improve transmission attenuation of side lobes without the need for high manufacturing accuracy.

Furthermore, the optical filter employed in the present invention secures predetermined transmission attenuation by the cascade arrangement of the two optical filter portions. Owing to this, specification requirements for transmission attenuation per optical filter portion can be relaxed. As a result, it is possible to make the structures of the TE-TM mode conversion type wavelength tunable optical filter portions simpler than the conventional structure shown in FIG. 4.

While this invention has been described in connection with certain preferred embodiments, it is to be understood that the subject matter encompassed by way of this invention is not to be limited to those specific embodiments. On the contrary, it is intended for the subject matter of the invention to include all alternative, modification and equivalents as can be included within the spirit and scope of the following claims.

## Claims

1. A light receiving apparatus comprising:

    a first optical filter having band pass characteristics; and
    a second optical filter cascaded to the first optical filter and having band pass characteristics different from those of said first optical filter.

2. A light receiving apparatus according to claim 1, wherein each of said first and second optical filters includes a TE-TM mode conversion type wavelength tunable optical filter device.

3. An apparatus according to claim 1 or 2, wherein said first and second optical filters make use of an acousto-optic effect.

4. An apparatus according to claim 1, 2 or 3, wherein said band pass characteristics are at least one of a band pass width and a transmission central wavelength.

5. A light receiving apparatus comprising:

    a first optical filter having band pass characteristics; and
    a second optical filter cascaded to the first optical filter and having band pass characteristics different from those of said first optical filter, and wherein
    each of said first and second optical filters includes:

        an optical waveguide formed on a surface of a dielectric substrate;
        an interdigital electrode provided on said substrate for exciting a surface acoustic wave;
        acoustic absorbers provided in front of and in back of said interdigital electrode;
        a polarizer provided at an input portion of said optical waveguide; and
        a polarizer provided in back of said acoustic absorbers.

6. A light receiving apparatus according to claim 5, wherein

    a distance (which is an interaction length) between said interdigital electrode and the acoustic absorber provided in back of the interdigital electrode in said first optical filter differs from a distance (which is an interaction length) between said interdigital electrode and the acoustic absorber provided in back of the interdigital electrode in said second filter.

7. A light receiving apparatus according to claim 5 or 6, wherein

    a frequency of a sine wave electric signal applied onto said interdigital electrode in said first optical filter differs from a frequency of a sine wave electric signal applied onto said interdigital electrode in said second optical filter.

8. A light receiving apparatus according to claim 5, 6 or 7, wherein

electric power of a sine wave electric signal applied onto said interdigital electrode in said first optical filter differs from electric power of a sine wave electric signal applied onto said interdigital electrode in said second optical filter.

9. An apparatus according to any one of claims 5 to 8, wherein

a ratio of the interaction length of said first optical filter to the interaction length of said second optical filter is between 1 : 0.56 and 1 : 0.81.

10. An apparatus according to any one of claims 5 to 9, wherein

each of said first and second optical filters further comprises a pair of surface acoustic wave barriers opposed each other and located above and below said optical waveguide.

11. A light receiving apparatus according to claim 10, wherein

a distance between said optical waveguide and said surface acoustic wave barrier is shorter at an input portion and an output portion of said optical waveguide than in the vicinity of a central portion.

12. An apparatus according to any one of claims 5 to 11, wherein said dielectric substrate is a lithium niobate (LiNbO3) substrate.

13. An apparatus according to any one of claims 5 to 12, further comprising:

a first oscillation circuit for applying a sine wave electric signal onto the interdigital electrode included in said first optical filter; and a second oscillation circuit for applying a sine wave electric signal onto the interdigital electrode included in said second optical filter.

14. A light receiving apparatus comprising:

a first optical filter having band pass characteristics; a second optical filter cascaded to the first optical filter and having band pass characteristics different from those of the first optical filter; and

an optical-to-electric conversion circuit for converting an outputted optical signal of said second filter to an electric signal, wherein

each of said first and second optical filters includes:

an optical waveguide formed on a surface of a dielectric substrate; an interdigital electrode provided on said substrate for exciting a surface acoustic wave; acoustic absorbers provided in front of and in back of said interdigital electrode; a polarizer provided at an input portion of said optical waveguide; and a polarizer provided in back of said acoustic absorbers.

# Fig. 1
# PRIOR ART

# Fig. 2
# PRIOR ART

CENTER WAVELENGTH λ =1550nm

OPTICAL WAVELENGTH (nm)

# Fig. 3

# PRIOR ART

# Fig. 4
# PRIOR ART

Fig. 5

PRIOR ART

# Fig. 6

EP 0 887 688 A2

# Fig. 7

CENTER WAVELENGTH λ =1550nm

(A)

(B)

(C)

OPTICAL WAVELENGTH

# Fig. 8

CENTER WAVELENGTH $\lambda$ =1550nm

NORMALIZED TRANSMISSION (dB)

1:0.55
1:0.82
1:0.67

OPTICAL WAVELENGTH (nm)

EP 0 887 688 A2

# Fig. 9

EP 0 887 688 A2